(19)

**Europäisches Patentamt**
**European Patent Office**
**Office européen des brevets**

(11) **EP 4 163 862 B1**

(12) **EUROPEAN PATENT SPECIFICATION**

(45) Date of publication and mention
of the grant of the patent:
**05.08.2026 Bulletin 2026/32**

(21) Application number: **21861178.8**

(22) Date of filing: **04.08.2021**

(51) International Patent Classification (IPC):
*G06Q 50/06* (2024.01)    *F24H 15/00* (2022.01)
*G05B 13/02* (2006.01)    *H02J 3/00* (2026.01)
*G05B 13/04* (2006.01)

(52) Cooperative Patent Classification (CPC):
**F24H 15/223; F24H 15/355; G06Q 10/04;**
**G06Q 10/0631; G06Q 50/06**

(86) International application number:
**PCT/JP2021/029026**

(87) International publication number:
**WO 2022/044750 (03.03.2022 Gazette 2022/09)**

(54) **PLANNING SYSTEM, PLANNING METHOD, AND PROGRAM**

PLANUNGSSYSTEM, PLANUNGSVERFAHREN UND PROGRAMM

DISPOSITIF DE PLANIFICATION, PROCÉDÉ DE PLANIFICATION ET PROGRAMME

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.08.2020 JP 2020145524**

(43) Date of publication of application:
**12.04.2023 Bulletin 2023/15**

(73) Proprietor: **Mitsubishi Heavy Industries Thermal**
**Systems, Ltd.**
**Tokyo, 100-8332 (JP)**

(72) Inventors:
• **NISHIKAWA Naoki**
**Tokyo 100-8332 (JP)**
• **OKADA Yuji**
**Tokyo 100-8332 (JP)**
• **KUROIWA Toru**
**Tokyo 100-8332 (JP)**

(74) Representative: **Cabinet Beau de Loménie**
**103, rue de Grenelle**
**75340 Paris Cedex 07 (FR)**

(56) References cited:
**EP-A1- 2 581 871      EP-A1- 2 581 872**
**EP-A1- 3 270 350      WO-A1-2018/122392**

**GB-A- 2 514 128      GB-A- 2 562 118**
**JP-A- 2008 089 208    JP-A- 2010 124 644**
**JP-A- 2011 033 246    JP-A- 2014 070 845**
**US-A1- 2018 196 456   US-A1- 2019 219 293**

• **TSUCHIYA, SHIZUO: "Hot water storage control**
**in heat pump water heaters", COMMUNICATIONS**
**OF THE OPERATIONS RESEARCH SOCIETY OF**
**JAPAN, vol. 54, no. 6, 1 June 2009 (2009-06-01),**
**JP**
**, pages 319 - 324, XP009534645, ISSN: 0030-3674**
• **TOKORO, KENICHI; KOMATSU, HIDENORI;**
**SHINOHARA, YASUSHI: "Generation of general-**
**purpose operation rules for heat pump water**
**heaters", JOURNAL OF JAPAN SOCIETY FOR**
**FUZZY THEORY AND INTELLIGENT**
**INFORMATICS, vol. 23, no. 6, 15 December 2011**
**(2011-12-15), JP**
**, pages 813 - 819, XP009534680, ISSN: 1347-7986,**
**DOI: 10.3156/jsoft.23.6_813**
• **TAKEUCHI AKIRA, TOSHIHIRO HAYASHI,**
**NOBORU IWASAKI, AND YOUSUKE NOZAKI:**
**"NTT Technical Review", NTT TECHNICAL**
**JOURNAL, 1 November 2010 (2010-11-01),**
**XP055903087, Retrieved from the Internet**
**<URL:https://www.ntt-review.jp/archive/**
**ntttechnical.php?contents=ntr201102fa4.pdf&**
**mode=show_pdf>**

EP 4 163 862 B1

## Description

Technical Field

The present disclosure relates to a planning system, a planning method, and a program.

Priority is claimed on Japanese Patent Application No. 2020-145524, filed August 31, 2020.

Background Art

A hot water supply system is used to supply hot water to kitchens and bath facilities of restaurants, hotels, schools, hospitals, welfare facilities, and the like. In the hot water supply system, a water heater heats tap water and stores the heated hot water in a hot water storage tank. Then, the hot water stored in the hot water storage tank is supplied to the kitchen or bath facility. For efficient operation of the hot water supply system, it is necessary to accurately estimate the amount of hot water stored in the hot water storage tank and the amount of power required to supply that amount of hot water, and to create a hot water storage plan that optimizes the amount of hot water and the amount of power.

For example, PTL 1 discloses a hot water supply system that ensures the amount of stored hot water corresponding to hot water consumption and efficiently performs a boiling operation without causing hot water shortage. In this hot water supply system, a difference between the amount of hot water stored at the end of a midnight time zone and the amount of hot water stored at the end of a daytime time zone is calculated and a predetermined marginal amount is added to this value to set a target amount of stored hot water heat. The hot water supply system performs a boiling operation such that the amount of hot water stored in the hot water storage tank in the midnight time zone reaches the target amount of stored hot water heat.

Citation List

Patent Literature

US 2019/219293 A1 discloses a control system for a central energy facility with distributed energy storage includes a high level coordinator, a low level airside controller, a central plant controller, and a battery controller. The high level coordinator is configured to perform a high level optimization to generate an airside load profile for an airside system, a subplant load profile for a central plant, and a battery power profile for a battery. The low level airside controller is configured to use the airside load profile to operate airside HVAC equipment of the airside subsystem. The central plant controller is configured to use the subplant load profile to operate central plant equipment of the central plant. The battery controller is configured to use the battery power profile to control an amount of electric energy stored in the battery or discharged from the battery at each of a plurality of time steps in an optimization period.

[PTL 1] Japanese Unexamined Patent Application Publication No. 2007-139339

Summary of Invention

Technical Problem

There is a demand for a method of creating an accurate hot water storage plan so that an efficient operation can be realized without causing hot water shortage.

The present disclosure provides a planning system, a planning method, and a program that can solve the above-mentioned problems.

Solution to Problem

According to an aspect of the present disclosure, a hot water supply system as defined in independent claim 1 is provided, comprising a water heater, a hot water storage tank, a sensor, a facility, and a planning system creates a storage plan for a storehouse storing an object to be supplied. The planning system includes: a storage plan creation unit that creates the storage plan for storing an amount of stored object in which a marginal amount is added to demand based on demand forecast for the object; and an optimization unit that optimizes the marginal amount. The system further includes a controller that controls an operation of the water heater on the basis of the amount of stored hot water measured by the sensor and the storage plan created by the storage plan creation unit. The optimization unit sets the marginal amount such that an evaluation value, which is based on a predetermined evaluation function with respect to an amount of remaining

**EP 4 163 862 B1**

stored object obtained in a case where the object is supplied on the basis of the storage plan, is optimized. The storage plan creation unit creates a hot water storage plan that includes a target amount of hot water stored in the hot water storage tank of the hot water supply system for each unit time. The optimization unit optimizes the marginal amount included in the target amount of stored hot water on the basis of the evaluation function. The optimization unit sets the marginal amount such that a reward of enhanced learning obtained in a case where setting of the marginal amount is used as an action and an amount of remaining stored hot water, which is obtained in a case where the hot water supply system is operated on the basis of the hot water storage plan created with the addition of the marginal amount, is used as a state is optimized.

According to another aspect of the present disclosure, a planning method for a hot water supply system comprising a water heater, a hot water storage tank, a sensor, a facility, and a planning system that creates a storage plan for a storehouse storing an object to be supplied as defined in independent claim 6 is provided. The planning method includes: a step of creating the storage plan for storing an amount of stored object in which a marginal amount is added to demand based on demand forecast for the object; and a step of optimizing the marginal amount, and a step of controlling an operation of the water heater on the basis of the amount of stored hot water measured by the sensor and the storage plan created in the step of creating the storage plan. In the step of optimizing, the marginal amount is set such that an evaluation value, which is based on a predetermined evaluation function with respect to an amount of remaining stored object obtained in a case where the object is supplied on the basis of the storage plan, is optimized. In the step of creating the storage plan, creating a hot water storage plan that includes a target amount of hot water stored in a hot water storage tank of a hot water supply system for each unit time. In the step of optimizing, optimizing the marginal amount included in the target amount of stored hot water on the basis of the evaluation function. In the step of optimizing, setting the marginal amount such that a reward of enhanced learning obtained in a case where setting of the marginal amount is used as an action and an amount of remaining stored hot water, which is obtained in a case where the hot water supply system is operated on the basis of the hot water storage plan created with the addition of the marginal amount, is used as a state is optimized.

According to another aspect of the present disclosure, a program causes a computer to perform processing for a hot water supply system comprising a water heater, a hot water storage tank, a sensor, a facility, and a planning system that creates a storage plan for a storehouse storing an object to be supplied, wherein the object is hot water and the storehouse is the hot water storage tank. The processing includes a step of creating the storage plan for storing an amount of stored object in which a marginal amount is added to demand based on demand forecast for the object, and a step of optimizing the marginal amount, and a step of controlling an operation of the water heater on the basis of the amount of stored hot water measured by the sensor and the storage plan created in the step of creating the storage plan. In the step of optimizing, the marginal amount is set such that an evaluation value, which is based on a predetermined evaluation function with respect to an amount of remaining stored object obtained in a case where the object is supplied on the basis of the storage plan, is optimized. In the step of creating the storage plan, creating a hot water storage plan that includes a target amount of hot water stored in the hot water storage tank of the hot water supply system for each unit time. In the step of optimizing, optimizing the marginal amount included in the target amount of stored hot water on the basis of the evaluation function. In the step of optimizing, setting the marginal amount such that a reward of enhanced learning obtained in a case where setting of the marginal amount is used as an action and an amount of remaining stored hot water, which is obtained in a case where the hot water supply system is operated on the basis of the hot water storage plan created with the addition of the marginal amount, is used as a state is optimized.

Advantageous Effects of Invention

According to the planning system, the planning method, and the program described above, it is possible to create an accurate storage plan.

Brief Description of Drawings

Fig. 1 is a diagram showing an example of a hot water supply system of an embodiment of the present disclosure.
Fig. 2 is a block diagram showing an example of a control system of the embodiment of the present disclosure.
Fig. 3 is a diagram showing an example of an inflow estimation model of the embodiment of the present disclosure.
Fig. 4 is a diagram showing an example of a demand forecasting model of the embodiment of the present disclosure.
Fig. 5 is a diagram showing an outline of an operation of the hot water supply system of the embodiment of the present disclosure.
Fig. 6 is a diagram showing an example of a hot water storage plan, a margin, and the like of the embodiment of the present disclosure.
Fig. 7 is a diagram showing an example of an evaluation function of the embodiment of the present disclosure.

Fig. 8 is a diagram showing an example of a table in which the amount of stored surplus hot water and the like of the embodiment of the present disclosure are recorded.

Fig. 9 is a diagram showing an example of a design table of the embodiment of the present disclosure.

Fig. 10 is a diagram showing an example of a power consumption estimation model of the embodiment of the present disclosure.

Fig. 11 is a diagram illustrating processing for refining power consumption of the embodiment of the present disclosure.

Fig. 12 is a diagram showing an example of a hardware configuration of a control system of the embodiment of the present disclosure.

Description of Embodiments

<Embodiment>

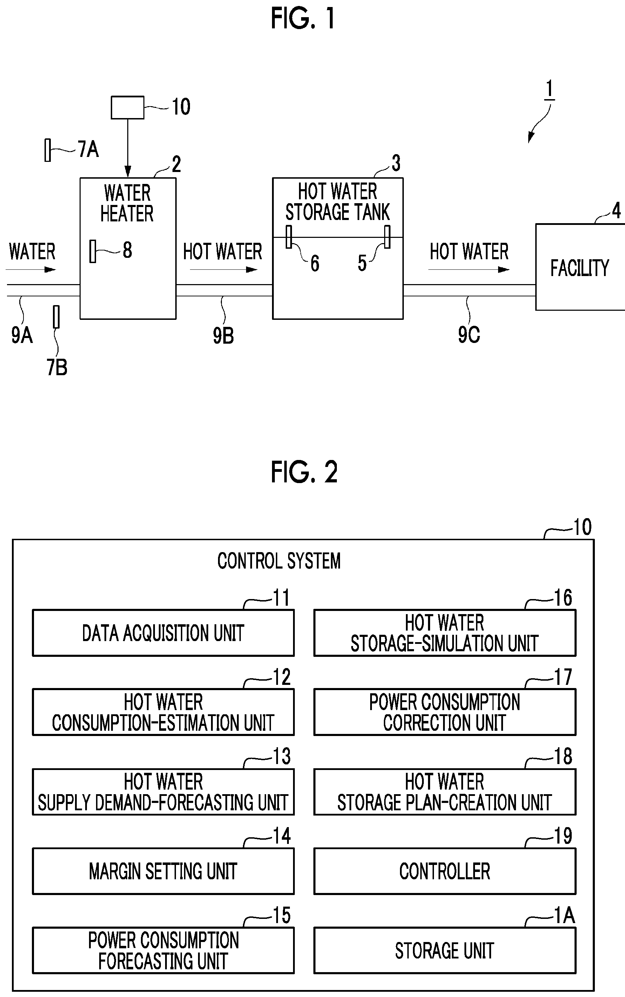

A hot water supply system according to an embodiment of the present disclosure will be described below with reference to Figs. 1 to 12.

(Configuration of hot water supply system)

Fig. 1 is a diagram showing an example of the hot water supply system of the embodiment of the present disclosure.

As shown in Fig. 1, the hot water supply system 1 includes a water heater 2, a hot water storage tank 3, a facility 4, and a control system 10. The water heater 2 and the hot water storage tank 3 are connected to each other by a pipe 9B, and the hot water storage tank 3 and the facility 4 are connected to each other by a pipe 9C. Water is supplied to the water heater 2 through the pipe 9A. The water heater 2 includes, for example, a refrigerant circuit including a compressor, a condenser, an expansion valve, and an evaporator, and exchanges heat using the condenser to heat water and to generate hot water. The water heater 2 sends the generated hot water to the hot water storage tank 3 through the pipe 9B. The hot water storage tank 3 stores hot water. The hot water storage tank 3 is provided with a sensor 5 that measures the amount of stored hot water. The sensor 5 is, for example, a water level sensor. The control system 10 controls the water heater 2 such that the amount of stored hot water measured by the sensor 5 reaches a target value. An amount of hot water corresponding to a demand of the facility 4 is supplied to the facility 4 from the hot water storage tank 3 through the pipe 9C.

The hot water supply system 1 is provided with a sensor 6 that measures the temperature of the hot water of the hot water storage tank 3, a sensor 7A that measures an outside air temperature, a sensor 7B that measures the temperature of water to be supplied to the water heater 2, a sensor 8 that measures power to be consumed by the compressor included in the water heater 2, and the like. The sensor 6 may be provided to measure the temperature of hot water supplied by the water heater 2. The sensor 8 may be a sensor that measures a current and a voltage supplied to the compressor. The control system 10 acquires measured values of these sensors 5 to 8.

(Configuration of control system)

Fig. 2 is a functional block diagram showing an example of the control system of the embodiment of the present disclosure.

The control system 10 includes, for example, one or a plurality of personal computers (PCs) or a computer, such as a server device. The control system 10 includes a data acquisition unit 11, a hot water consumption-estimation unit 12, a hot water supply demand-forecasting unit 13, a margin setting unit 14, a power consumption forecasting unit 15, a hot water storage-simulation unit 16, a power consumption correction unit 17, a hot water storage plan-creation unit 18, a controller 19, and a storage unit 1A.

The data acquisition unit 11 acquires measured values measured by the sensors 5 to 8, the type of an operation mode of the water heater 2, parameters required for hot water supply demand forecast and power consumption forecast, and the like.

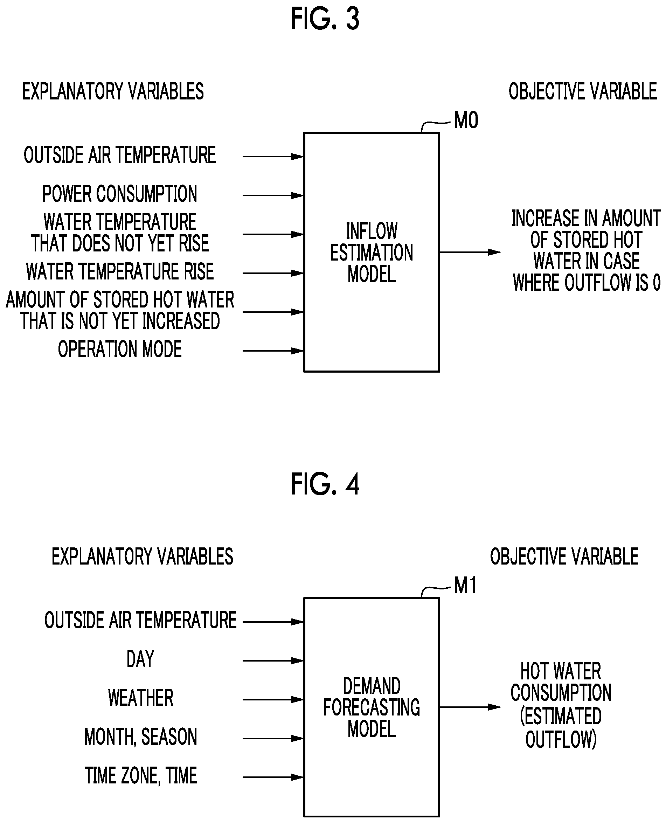

The hot water consumption-estimation unit 12 estimates an inflow of hot water to the hot water storage tank 3 on the basis of a predetermined inflow estimation model M0, and estimates an outflow of hot water from the hot water storage tank 3 (hot water consumption) on the basis of a change in the amount of hot water stored in the hot water storage tank 3 measured by the sensor 5, the estimated inflow, and the operation mode of the water heater 2. Here, an example of the inflow estimation model M0 will be described with reference to Fig. 3. The inflow estimation model M0 is a trained model built using multiple regression analysis, machine learning, or the like while an outside air temperature, power consumption (kWh) required to boil water, a water temperature (°C) of the hot water of the hot water storage tank 3 that does not yet rise, a rise (°C) in the water temperature, the amount (%) of stored hot water that is not yet increased, and an operation mode are used as explanatory variables, and an increase in the amount of hot water stored in the hot water storage tank 3 in a case where an outflow of hot water from the hot water storage tank 3 is 0 is used as an objective variable. In a case where the explanatory variables are input to the inflow estimation model M0, it is possible to estimate the amount of hot water boiled by the water heater 2 (the amount of supplied hot water). In a case where a water level measured by the sensor 5 is assumed as a decrease $\Delta V$ in the amount of stored hot water and the amount of supplied hot water estimated by the inflow estimation model M0 is assumed as an estimated inflow Vin_S, an outflow of hot water from the hot water storage tank 3 can be estimated using the following equation (1).

Estimated outflow Vout_S=estimated inflow Vin_S-decrease $\Delta V$ in the amount of stored hot water ... (1)      (1)

The hot water consumption-estimation unit 12 can estimate hot water consumption using Equation (1).

The hot water supply demand-forecasting unit 13 forecasts demand for hot water in a target period on the basis of a predetermined demand forecasting model. Here, an example of a demand forecasting model M1 will be described with reference to Fig. 4. The demand forecasting model M1 is a trained model that is built by learning a relationship between various parameters (explanatory variables) that affect the demand of hot water in an environment where the hot water supply system 1 operates, such as an outside air temperature, a day, weather, a month and a season, a time, and a time or a time zone (morning, noon, or evening) in one day, and hot water consumption (objective variable) that is estimated by the hot water consumption-estimation unit 12, using multiple regression analysis or the like. The hot water supply demand-forecasting unit 13 forecasts demand for hot water for each unit time using the demand forecasting model and the parameters that are acquired by the data acquisition unit 11. The hot water supply demand-forecasting unit 13 may have a function to update (or create) the demand forecasting model M1 on the basis of parameters that were acquired in the past by the data acquisition unit 11 and the hot water consumption that is estimated by the hot water consumption-estimation unit 12. For example, since a demand of the facility 4 may be changed depending on the circumstances of the facility, the hot water supply demand-forecasting unit 13 may periodically recreate a demand forecasting model.

The margin setting unit 14 sets a margin (a margin $S_{mrg}$ to be described later, a safety value S2) of the amount of stored hot water that should be considered in a case where a hot water storage plan is to be created.

The power consumption forecasting unit 15 forecasts power consumption required to boil water on the basis of a predetermined setting table or a power consumption estimation model M2 (to be described later).

The hot water storage-simulation unit 16 simulates a hot water supply operation of the hot water supply system 1 in a predetermined period on the basis of a hot water storage plan and the demand for hot water forecasted by the hot water supply demand-forecasting unit 13. The water heater 2 performs an operation for checking the amount of hot water stored in the hot water storage tank 3 every unit time in regard to a target amount of stored hot water set every unit time, starting to supply hot water (to boil water) in a case where the amount of hot water stored in the hot water storage tank 3 does not reach the target amount of stored hot water, and stopping supplying hot water at a point of time when the amount of hot water stored in the hot water storage tank 3 reaches the target amount of stored hot water. The hot water storage-simulation unit 16 simulates this operation, and calculates the amount of stored hot water for each unit time, the amount of supplied hot water (an inflow of hot water to the hot water storage tank 3), an outflow of hot water from the hot water storage tank 3, and power consumption required to supply hot water. For example, in a case where the amount of stored hot water is 100% in an initial state, both target amounts of stored hot water after 1 hour and after 2 hours are 100%, demand for hot water after 0 to 1 hour (hot water consumption) is 10%, and demand for hot water after 1 to 2 hours (hot water consumption) is 0%, the hot water storage-simulation unit 16 simulates an operation in which 90% of the amount of stored hot water after 1 hour is calculated, the water heater 2 starts to supply hot water at that point of time, and hot water is supplied such that the amount of stored hot water after 2 hours reaches 100% of the target amount of stored hot water. The hot water storage-simulation unit 16 calculates power consumption assuming that a water boiling operation has been continuously performed in unit time where the hot water supply operation is performed. In this example, the hot water storage-simulation unit 16 calculates power consumption for 1 to 2 hours assuming that hot water has been supplied for 1 to 2 hours.

The power consumption correction unit 17 refines the power consumption that is calculated by the hot water storage-simulation unit 16.

The hot water storage plan-creation unit 18 creates a hot water storage plan one time in a predetermined period (for example, one day), and creates a hot water storage plan for each unit time (for example, one hour) in the next predetermined period (for example, the next day). For example, a target value of the amount of hot water stored (a target amount of stored hot water) in the hot water storage tank 3 for each unit time is set in the hot water storage plan. In a case where the hot water storage plan is given to the water heater 2, the water heater 2 is operated to boil water and to supply boiled hot water to the hot water storage tank 3 such that the amount of hot water stored in the hot water storage tank 3 reaches the target value indicated in the hot water storage plan. The hot water storage plan-creation unit 18 can create a hot water storage plan by two methods, that is, (P1) a method of creating a hot water storage plan such that a margin is minimum on the basis of demand for hot water and (P2) a method of creating a hot water storage plan such that power consumption is minimum while satisfying a demand for hot water (to some extent).

The controller 19 controls the operation of the water heater 2 on the basis of the amount of stored hot water measured by the sensor 5 and the hot water storage plan created by the hot water storage plan-creation unit 18.

The storage unit 1A stores the data acquired by the data acquisition unit 11, the inflow estimation model M0, the power consumption estimation model M2, the demand forecasting model M1, and the like.

(Operation of hot water supply system)

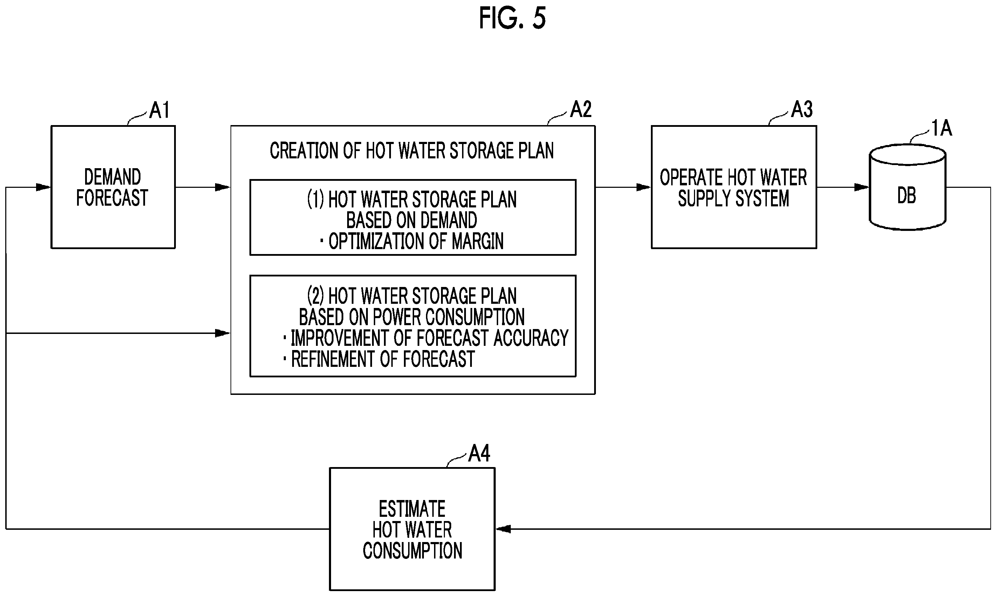

Fig. 5 is a diagram showing an outline of an operation of the hot water supply system of the embodiment of the present disclosure.

The hot water supply system 1 forecasts demand for each hour of the next day at the end of one day (A1) to create a hot water storage plan (A2), and is operated on the next day on the basis of the hot water storage plan (A3). Then, at the end of the day, the hot water supply system 1 creates a hot water storage plan for next 24 hours again on the basis of the demand forecast (A1) of the next day (A2). Hot water consumption estimation (A4) is a configuration required for a hot water supply system that is not provided with a sensor measuring the flow rate of hot water supplied from the hot water storage tank 3 to the facility 4. The hot water consumption estimation (A4) is used for, for example, the creation or update of the demand forecasting model M1, or the calculation of the amount R of stored surplus hot water to be described later.

First, the hot water supply demand-forecasting unit 13 forecasts the demand of the next day (A1).

For example, a user inputs parameters related to demand, such as the day of the next day, an outside air temperature for each hour, and weather, to the control system 10. In the control system 10, the data acquisition unit 11 acquires these parameters and these parameters are written and stored in the storage unit 1A. The hot water supply demand-forecasting unit 13 reads out the demand forecasting model M1 and the stored parameters from the storage unit 1A, and inputs parameters for each hour into the demand forecasting model M1. The demand forecasting model M1 outputs demand for hot water for each hour. The hot water supply demand-forecasting unit 13 outputs demand for each hour as forecast data. The forecast data include data in which demand for hot water for each hour is represented as the amount of hot water stored in the hot water storage tank 3. For example, the forecast data include demand in 0 o'clock zone ($=X_0(\%)$), demand in 1 o'clock zone ($=X_1(\%)$), ... demand in 23 o'clock zone ($=X_{23}(\%)$). Demand in 0 o'clock zone ($=X_0(\%)$) indicates that demand for hot water corresponding to $X_0(\%)$ of the hot water storage tank 3 is expected from 0 to 1 o'clock. The hot water supply demand-forecasting unit 13 writes and stores the forecast data in the storage unit 1A.

Next, the hot water storage plan-creation unit 18 creates a hot water storage plan (A2).

A user presets one of (P1) a method of creating a hot water storage plan such that a margin is minimum on the basis of demand for hot water and (P2) a method of creating a hot water storage plan such that power consumption is minimum while satisfying a demand for hot water, as a method that is to be used to create a hot water storage plan. The hot water storage plan-creation unit 18 creates a hot water storage plan on the basis of this setting.

(P1) Creating hot water storage plan such that margin is minimum on the basis of demand for hot water

In the case of this method, the hot water storage plan-creation unit 18 creates a hot water storage plan using an arbitrary method such that a demand is satisfied. For example, as the simplest example, the hot water storage plan-creation unit 18 creates a hot water storage plan in which a value obtained by adding a safety value S2, which is obtained in a case where a lower limit S1 for hot water shortage for preventing hot water shortage and a predetermined marginal amount $S_{mrg}$ are summed up, to the demand for each unit time forecasted by the hot water supply demand-forecasting unit 13 is used as a target amount of hot water stored at the start of each unit time. Further, for example, assuming that hot water corresponding to the safety value S2 remains at the end of one day, the hot water storage plan-creation unit 18 may accumulate a forecasted value of demand at each time, which is forecasted by the hot water supply demand-forecasting unit 13, from the later time to create a hot water storage plan in one day such that a forecasted value of demand in 23 o'clock zone is added to the safety value S2 to set a target amount of hot water stored at 23 o'clock and a forecasted value of demand at 22 o'clock is added to set a target amount of hot water stored at 22 o'clock. In this method, for example, in a case where an accumulated value exceeds 100% and forecasted demand in a certain time, which makes a target amount of stored hot water be 100%, is an amount of hot water that is in time even through water starts to be boiled at the unit time, a forecasted value is not accumulated. On the contrary, in a case where a forecasted value of demand in a certain time corresponds to an amount of hot water that cannot be covered by a hot water supply operation in 1 hour, a time required to boil an amount of water covering the demand is calculated and an adjustment for distributing and accumulating demand from a point of time going back by the calculated time is made. According to this method, the amount of hot water, which is forecasted to be required in a certain unit time, can be stored in the hot water storage tank 3 in advance. In a case where a hot water storage plan is to be created in the related art, a hot water storage plan for each unit time is often created in a state where the value of a margin $S_{mrg}$ is set to a large value so that a forecast error of the hot water supply demand-forecasting unit 13 or an estimation error of hot water consumption used to create the demand forecasting model M1 can be compensated. Accordingly, actually, there is a possibility that a plan in which hot water tends to be excessive or insufficient (in many cases, excessive) is made. On the other hand, an appropriate marginal amount $S_{mrg}$, that is, an appropriate safety value S2 are set in this embodiment by a method to be described below.

(Setting of margin of amount of stored hot water)

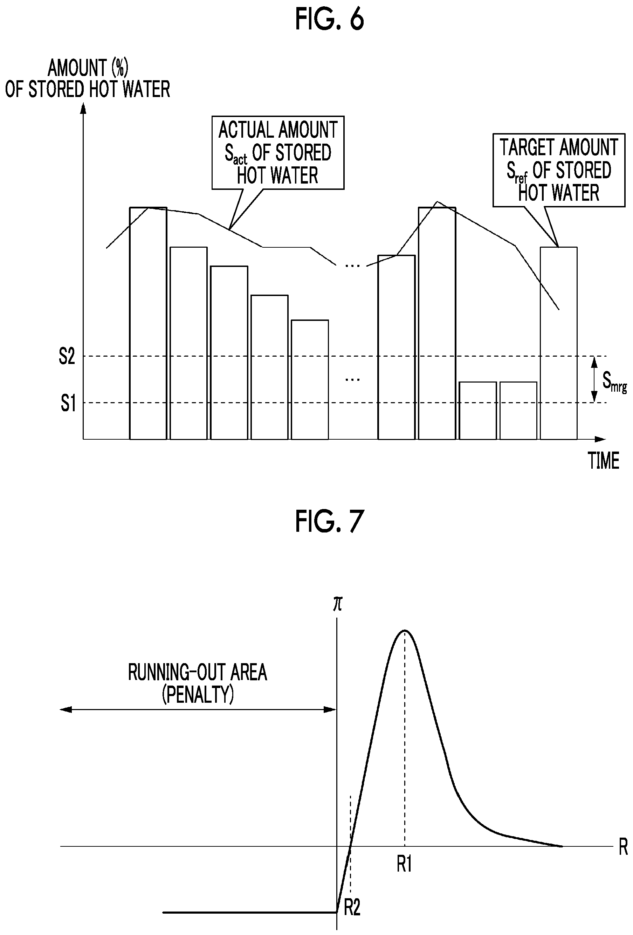

Fig. 6 shows an example of a relationship among a lower limit S1 for hot water shortage, a margin $S_{mrg}$, and a safety value S2, a target amount of stored hot water for each time that is indicated in the hot water storage plan, and an actual amount of stored hot water in a case where an operation is performed on the basis of the hot water storage plan. A bar graph shows the transition of a target amount $S_{ref}$ of stored hot water for each time created by the hot water storage plan-creation unit 18, and a solid line graph shows an actual amount $S_{act}$ of stored hot water for each time (actual value). S1 denotes a lower limit for hot water shortage, S2 denotes a safety value, and a difference between S1 and S2 indicates the margin $S_{mrg}$. The margin setting unit 14 subtracts total actual demand, which is estimated by the hot water consumption-estimation unit 12, from a total amount of hot water, which is actually boiled in one day by the water heater 2, to calculate the amount R of stored surplus hot water. A total amount of hot water actually boiled by the water heater 2 includes the amount of hot water that has not been included in the plan but has been boiled in a hurry due to a rapid increase in demand, and the like. A total amount of hot water actually boiled by the water heater 2 can be calculated on the basis of the inflow estimation model M0. Alternatively, in a case where a flow rate sensor is provided on the inlet side of the hot water storage tank 3, a total amount of hot water actually boiled by the water heater 2 can be calculated from a total flow rate measured by the flow rate sensor.

At the end of one day, the margin setting unit 14 calculates a reward (evaluation value) with respect to the amount R of stored surplus hot water when the hot water storage plan has been created from the daily margin $S_{mrg}$ using a predetermined reward function $\pi(R)$. Fig. 7 shows an example of the reward function $\pi(R)$. The reward function $\pi$ is a function that is created to be maximum in a case where the value of the amount R of stored surplus hot water reaches R1 and to have a negative value in a case where the value of the amount R of stored surplus hot water is less than R2 (for example, the lower limit S1 for hot water shortage). The margin setting unit 14 sets a margin $S_{mrg}$ that improves (increases) the value of the reward function $\pi(R)$ on a daily basis, calculates the amount R of stored surplus hot water at the end of one day, and uses the reward function $\pi(R)$ to evaluate the amount R of stored surplus hot water with respect to the value of the margin $S_{mrg}$ set in the day. The margin setting unit 14 records the daily margin $S_{mrg}$, the amount R of stored surplus hot water, and the value of the reward function $\pi(R)$ in the storage unit 1A on a daily basis such that the daily margin $S_{mrg}$, the amount R of stored surplus hot water, and the value of the reward function $\pi(R)$ are associated with each other.

The margin setting unit 14 searches for a value of the margin $S_{mrg}$ that improves the reward function $\pi(R)$, and sets this $S_{mrg}$ as a margin $S_{mrg}$ of the next day. For example, a trained action value function, which is built in advance using an enhanced learning method, such as Q learning, such that an action is used as the setting of $S_{mrg}$ and a state is used as the amount R of stored surplus hot water, is registered in the storage unit 1A. The action value function is created to output $S_{mrg}$, which improves the value of the reward function $\pi(R)$, in a case where, for example, R, $S_{mrg}$, and the like are input. The margin setting unit 14 may input the amount R of stored surplus hot water, the margin $S_{mrg}$, and the like of the day to the action value function, obtain a margin $S_{mrg}$ having the largest value from the action value function, and set this value as a margin $S_{mrg}$ of the next day. The reward function may be an evaluation function that evaluates the value of R. The margin setting unit 14 creates a plurality of hot water supply plans obtained in a case where only the margin $S_{mrg}$ (that is, safety value S2) is changed in the hot water storage plan of the day created by the hot water storage plan-creation unit 18, and uses the hot water storage-simulation unit 16 to calculate the amount of supplied hot water (the amount of boiled water) or hot water consumption for each hour of the day in a case where the hot water supply system 1 is operated on the basis of the created hot water supply plans. Then, the margin setting unit 14 acquires simulation results, subtracts total actual demand of the same day from a total amount of boiled water in one day to calculate the amount R of stored surplus hot water, and calculates an evaluation value using the same evaluation function as the reward function $\pi(R)$. Further, the margin setting unit 14 may set the value of the margin $S_{mrg}$, which is obtained in a case where an evaluation value is largest among the simulation results, as a margin $S_{mrg}$ of the next day. The hot water storage plan-creation unit 18 creates a hot water storage plan of the next day using the margin $S_{mrg}$ of the next day that is set by the margin setting unit 14. For example, the hot water storage plan-creation unit 18 creates a hot water storage plan by accumulating demand for each hour, which is forecasted by the hot water supply demand-forecasting unit 13, on a safety value S2 (lower limit S1 for hot water shortage + margin $S_{mrg}$) based on the margin $S_{mrg}$ of the next day that is set by the margin setting unit 14, from 23 o'clock in the order of time. Then, at the end of the next day, the margin setting unit 14 calculates the amount R of stored surplus hot water from an actual value of a total amount of hot water boiled in the next day by the water heater 2 and total actual demand, calculates a reward amount using the reward function $\pi(R)$, and sets the margin $S_{mrg}$ of the next day while recording these values and the margin $S_{mrg}$ in the storage unit 1A such that these values and the margin $S_{mrg}$ are associated with each other.

The margin setting unit 14 repeats the above-mentioned processing and adjusts the magnitude of the margin

$S_{mrg}$. For example, the margin setting unit 14 may calculate the amount R of stored surplus hot water and an average value of rewards (evaluation values) every week, monitor an aspect in which the amount R of stored surplus hot water approach R1 and the average value of the rewards approaches the maximum value week after week, and output a warning in a case where a reward is reduced from a reward of the previous week by a predetermined value or more.

Accordingly, an actual amount of remaining stored hot water can be fed back to the hot water storage plan to dynamically optimize the margin $S_{mrg}$ and to optimize the hot water storage plan in which hot water tends to be excessive or insufficient. For example, since a demand forecast error and a flow rate estimation error do not need to be added, a hot water storage plan in which energy is further saved can be created. Since an accurate hot water storage plan can be created without a flowmeter that measures the flow rate of hot water supplied to the facility 4 from the hot water storage tank 3, the use of a sensor is not necessary. As a result, costs for the installation and maintenance of the sensor can be reduced.

An interval where the margin setting unit 14 evaluates the value of the margin $S_{mrg}$ or sets a new margin $S_{mrg}$ is not limited to every day, and may be every two days, every week, or the like. Alternatively, the margin setting unit 14 may set the value of a margin $S_{mrg}$ for each day, evaluate the value of the margin $S_{mrg}$ when each day ends, and set a margin $S_{mrg}$ of the same day of the next week.

(P2) Creating hot water storage plan such that power consumption is minimum

Criteria (policies) used to create a hot water storage plan are not limited to criteria in which hot water shortage does not occur and the amount of remaining stored hot water is reduced as much as possible. For example, it is also conceivable to create a hot water storage plan in terms of minimizing power consumption (power cost) required to boil water. For example, in a case where a risk of hot water shortage is in an allowable range even though the risk of hot water shortage is increased to some extent, it is conceivable to create a hot water storage plan with priority given to a reduction in power consumption. In such a case, an accurate forecast of power consumption required to perform the hot water storage plan is required. Regardless of creating a hot water storage plan that optimizes power consumption, there is also a need to grasp power consumption required to perform the hot water storage plan as accurately as possible. The power consumption forecasting unit 15 accurately forecasts power consumption required to boil water. The hot water storage-simulation unit 16 calculates power consumption, which is required to supply hot water using the power consumption that is accurately forecasted. The power consumption correction unit 17 refines a forecasted value of the power consumption that is calculated by the hot water storage-simulation unit 16.

(Forecast of power consumption)

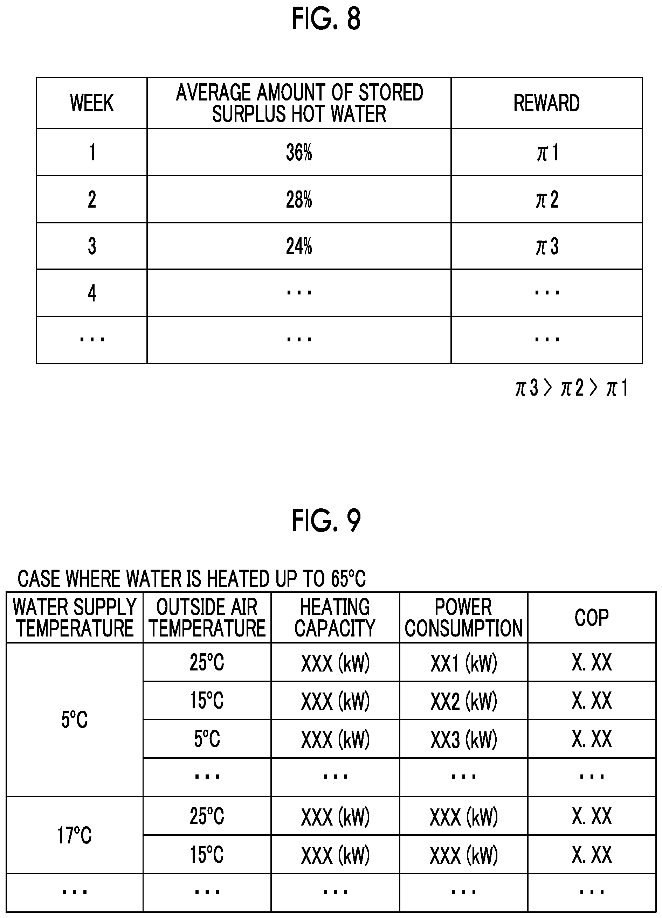

Fig. 9 is a diagram showing an example of a design table of the embodiment of the present disclosure.

In the design table illustrated in Fig. 9, the heating capacity of the water heater 2, power consumption required to create a unit amount of stored hot water, and a coefficient of performance (COP) are associated with each other for each of a boiling temperature (set temperature), a water supply temperature (incoming water temperature), and an outside air temperature. The storage unit 1A stores a design table for each boiling temperature. In a case where power consumption is forecasted on the basis of a hot water storage plan, the data acquisition unit 11 acquires a set value of a boiling temperature, a forecasted value of a water supply temperature of the next day, and a forecasted value of an outside air temperature of the next day. The power consumption forecasting unit 15 refers to the design table and acquires power consumption on the basis of these values. For example, in a case where the outside air temperature of the next day is 15°C, a water supply temperature is 5°C, and water is heated up to 65°C, the power consumption forecasting unit 15 acquires XX2 (kW) from the design table. For example, in a case where a target amount of stored hot water at 6 o'clock on the next day is 80% and it can be calculated that hot water of Y(L) should be boiled between 5 o'clock and 6 o'clock on the basis of demand forecasted by the hot water supply demand forecasting model M1, the hot water storage-simulation unit 16 can calculate a forecasted value of power consumption between 5 o'clock and 6 o'clock from "XX2(kW)×Y(L)×1(hour)". The design table illustrated in Fig. 9 is a design table that is created from measurement or theoretical calculation in advance. Since the installation conditions and system configuration (the length of a pipe, the diameter of a pipe, a hot water storage tank, a volume, an altitude, and the like) of an actual hot water supply system 1 vary from system to system, it is not possible to cope with all hot water supply systems with a uniform design table. For this reason, it is likely to be difficult to make an accurate forecast. The water heater 2 has various operation modes (a normal hot water supply operation, a full storage operation, a reheating operation, a defrost operation, and the like), and power consumption differs in the respective operation modes. Accordingly, in this embodiment, a power consumption estimation model M2, which uses a water supply temperature, a boiling temperature, an outside air temperature, and an operation mode as explanatory variables and uses power consumption as an objective variable, is created and power consumption is estimated using the power consumption estimation model M2.

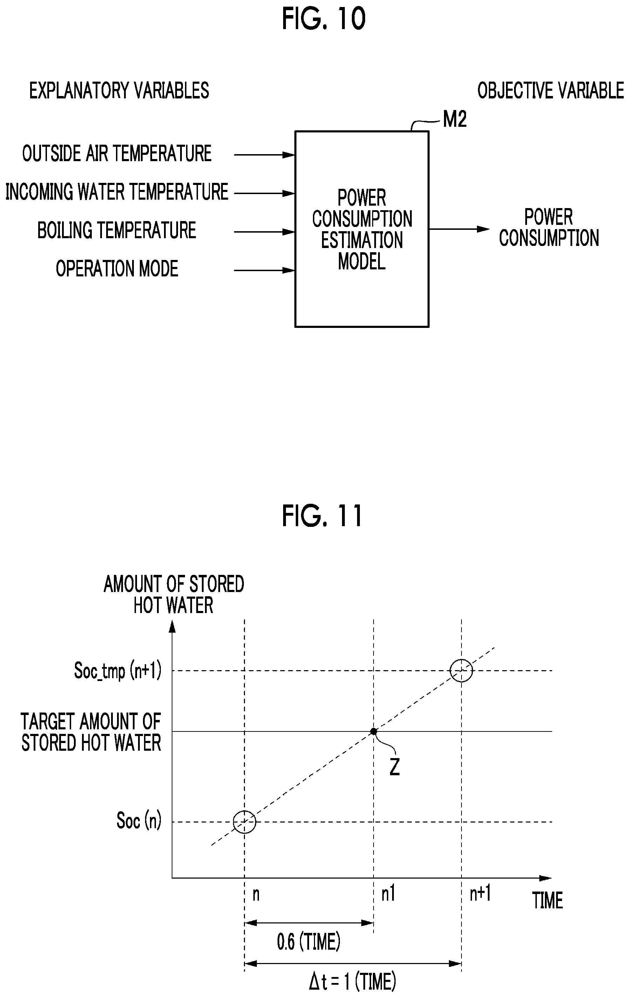

Fig. 10 is a diagram showing an example of the power consumption estimation model of the embodiment of the present disclosure.

The explanatory variables of the power consumption estimation model M2 are an outside air temperature (°C), the temperature (°C) of water to be supplied to the water heater 2 (incoming water temperature)), a boiling temperature (°C), and an operation mode. In a learning step, a value measured by the sensor 7A is used as the outside air temperature and a value measured by the sensor 7B is used as the incoming water temperature. The boiling temperature and the operation mode are set values. The objective variable of the power consumption estimation model M2 is power consumption. A value measured by the sensor 8 is used as the power consumption. The data acquisition unit 11 acquires the objective variable and the explanatory variables that are measured at the same time, and records these variables in the storage unit 1A such that these variables are associated with each other. In a case where learning data can be sufficiently collected, the power consumption forecasting unit 15 creates the power consumption estimation model M2, which shows a relationship between the explanatory variables and the objective variable illustrated in Fig. 10, using a method, such as multiple regression analysis, machine learning, or the like. In a case where the power consumption forecasting unit 15 creates the power consumption estimation model M2, the power consumption forecasting unit 15 writes and stores the power consumption estimation model M2 in the storage unit 1A. Accordingly, a highly accurate power consumption estimation model M2 that reflects individual differences of the hot water supply system 1 can be created.

After the power consumption estimation model M2 is created, for example, during the simulation performed by the hot water storage-simulation unit 16, the amount of hot water, which should be boiled for each unit time, is calculated on the basis of a target amount of stored hot water for each unit time in the hot water supply plan created by the hot water storage plan-creation unit 18 and demand for hot water for each unit time of the next day forecasted by the hot water supply demand-forecasting unit 13. The data acquisition unit 11 acquires forecasted values of an incoming water temperature, a boiling temperature, an outside air temperature, and an operation mode for each hour of the next day. The power consumption forecasting unit 15 inputs the explanatory variables for each hour, which are acquired by the data acquisition unit 11, to the power consumption estimation model M2 during the simulation performed by the hot water storage-simulation unit 16. The power consumption estimation model M2 outputs power consumption for each hour. The hot water storage-simulation unit 16 multiplies the power consumption, which is output from the power consumption estimation model M2, by the amount of hot water, which is to be boiled for each hour, to calculate power consumption for each unit time. Accordingly, it is possible to forecast highly accurate power consumption that reflects the individual differences of the hot water supply system 1, and to create a hot water supply plan that realizes an energy-saving operation by reflecting the forecasted power consumption in the creation of a hot water supply plan.

For a while after the operation of the hot water supply system 1, the hot water supply system 1 may be operated such that power consumption is forecasted using the design table illustrated in Fig. 9, a power consumption estimation model M2 is created in a step where learning data (the explanatory variables and the objective variable) are accumulated, and power consumption is forecasted on the basis of the power consumption estimation model M2. Even after the creation of the power consumption estimation model M2, learning data may be accumulated and a power consumption estimation model M2 may be periodically recreated and updated. Accordingly, since estimation accuracy can be improved as the operation is continued, it is also possible to cope with the secular change of the water heater 2.

The control system 10 may have a function to create a heating capacity estimation model that uses an outside air temperature, an incoming water temperature, a boiling temperature, and an operation mode as explanatory variables and uses a heating capacity as an objective variable and a function to forecast the heating capacity of the water heater 2 from these explanatory variables. Likewise, the control system 10 may have a function to create a coefficient-of-performance estimation model that uses an outside air temperature, an incoming water temperature, a boiling temperature, and an operation mode as explanatory variables and uses a coefficient of performance (COP) as an objective variable and a function to forecast the coefficient of performance of the water heater 2 from these explanatory variables.

(Refinement of power consumption)

The forecast accuracy of power consumption is improved by the power consumption forecasting unit 15, but there is another problem in calculating power consumption by performing simulation. This problem is a step time of calculation. For example, it is assumed that the hot water storage-simulation unit 16 simulates a hot water supply operation on an hourly basis. In a case where a target amount of hot water stored at "t=n" is 100% and the amount of hot water stored at "t=n" during simulation is 95%, the hot water storage-simulation unit 16 causes the water heater 2 to boil water to make a difference of 5% be changed to 0 and simulates an operation for making the amount of stored hot water be changed to 100% at "t=n+1" that is the next calculation cycle. Here, it is assumed that the water heater 2 has a capacity to boil 5% or more of the amount of stored hot water during "t=1". Accordingly, actually, for example, even though the water heater 2 achieves 100% of the hot water storage amount in 30 minutes and then stops, the hot water storage-simulation unit 16 calculates power consumption assuming that the water heater 2 continues to boil water between t=n and t=n+1. As a result, an error occurs in power consumption. In order to cope with this problem, it is conceivable to finely divide the time step of the calculation. However, in a case where the time step of the calculation is finely divided, there is another problem that a calculation load or a calculation time is increased. Particularly, in a case where a long-term operation plan is made, or the like, a memory having large storage capacity is required, which requires large costs. Accordingly, the power consumption correction unit 17 performs processing that solves the above-mentioned problems and refines power consumption calculated by the hot water storage-simulation unit 16, in a state where the time step of calculation is 1 hour.

Fig. 11 is a diagram illustrating processing for refining power consumption of the embodiment of the present disclosure.

The power consumption correction unit 17 refines power consumption according to the following procedure.

(Procedure 1) First, the power consumption correction unit 17 specifies the amount of hot water stored at the time of start. Here, a start time of a target section is denoted by n and an end time thereof is denoted by n+1. The amount of hot water stored at the time of start calculated by the hot water storage-simulation unit 16 is denoted by Soc(n), and the amount of hot water stored at the time of end is denoted by Soc(n+1). The power consumption correction unit 17 specifies the amount Soc(n) of hot water stored at the start time n among the amounts of stored hot water for every unit time (for every time step of calculation) calculated by the hot water storage-simulation unit 16.

(Procedure 2) Next, the power consumption correction unit 17 calculates Soc_tmp(n+1) that is a provisional amount of hot water stored at the time of end. Soc_tmp(n+1) is the amount of hot water stored at a time n+1 in a case where it is assumed that the water heater 2 continues to boil water for 1 hour (=$\Delta t$) and provides the hot water to the hot water storage tank 3. The power consumption correction unit 17 calculates the amount m of hot water, which is generated per hour (=$\Delta t$), from the following equation (2).

$$Q = m \times c \times \Delta t \quad ... \quad (2)$$

Here, Q denotes the heating capacity of the water heater 2 per unit time, c denotes the specific heat of water, and $\Delta t$ denotes a time step (1 hour). Q can be determined with reference to the setting table illustrated in Fig. 9. For example, the power consumption correction unit 17 obtains heating capacity Q from an incoming water temperature, an outside temperature, and a boiling temperature, which are assumed at the time of simulation, with reference to the setting table. c and $\Delta t$ are constants, and are recorded in the storage unit 1A in advance. The power consumption correction unit 17 calculates the amount m of generated hot water from heating capacity Q, c, $\Delta t$, and Equation (2). The power consumption correction unit 17 adds m to Soc(n) obtained at a specified time n to calculate Soc_tmp(n+1).

In a case where a heating capacity forecasting model is created in the same manner as the power consumption estimation model M2, the power consumption correction unit 17 may input an incoming water temperature, an outside temperature, a boiling temperature, and an operation mode to the heating capacity estimation model and calculate heating capacity Q.

(Procedure 3) Then, the power consumption correction unit 17 linearly interpolates Soc(n) and Soc_tmp(n+1) and calculates an intersection point between the target amount of stored hot water and an interpolated line. Specifically, the power consumption correction unit 17 obtains an intersection point Z between a straight line, which connects Soc (n) to Soc_tmp(n+1), and the target amount of stored hot water.

(Procedure 4) Next, the power consumption correction unit 17 calculates a time ratio until a point on the straight line reaches the intersection point Z in one step time. Here, in a case where a time corresponding to the intersection point Z is denoted by n1, the power consumption correction unit 17 calculates a ratio of a length between the time n and the time n1 to $\Delta t$. For example, a time ratio is assumed as 0.6.

(Procedure 5) Then, the power consumption correction unit 17 multiplies power consumption, which is calculated by the hot water storage-simulation unit 16 and is consumed between the time n and the time n+1, by a time ratio of 0.6 to calculate refined power consumption.

Power consumption per hour is refined according to the above-mentioned procedure. Accordingly, it is possible to refine power consumption, which is calculated in simulation, without increasing a memory or a calculation time.

The hot water storage plan-creation unit 18 creates, for example, a hot water storage plan that solves an optimization problem in which an objective function is to minimize daily power consumption and a constraint is to satisfy demand. Specifically, the hot water storage plan-creation unit 18 creates a plurality of hot water storage plans, which satisfies a forecasted value of demand for each hour, using an arbitrary method, and causes the hot water storage-simulation unit 16 to calculate the amount of stored hot water, an inflow (the amount of hot water supplied by the water heater 2), an outflow, and power consumption that are obtained for each hour in a case where each hot water storage plan is performed. The hot water storage-simulation unit 16 simulates an operation that boils water using the water heater 2 in a case where the amount of stored hot water for each hour is less than a target amount of stored hot water indicated in the hot water storage plan and does not boil water in a case where the amount of stored hot water for each hour is equal to or larger than the target amount of stored hot water indicated in the hot water storage plan. An inflow and an outflow are calculated from a calculation made by the hot water storage-simulation unit 16, and power consumption per hour is calculated on the basis of the power consumption estimation model M2 and is then refined by the power consumption correction unit 17. An inflow obtained immediately before 1 hour is added to the amount of stored hot water obtained before 1 hour and an outflow obtained immediately before 1 hour is subtracted from the sum of the inflow and the amount of stored hot water, so that the amount of stored hot water is calculated. The hot water storage plan-creation unit 18 selects a hot water storage plan in which the sum of daily power consumption (refined power consumption), which is based on the hot water storage plan and is calculated by the hot water storage-simulation unit 16, is minimum. Accordingly, a hot water storage plan for optimizing power consumption is created. It is possible to create a hot water storage plan that optimizes power consumption on the basis of more accurate power consumption by the functions of the power consumption forecasting unit 15 and the power consumption correction unit 17.

Next, the controller 19 operates the hot water supply system 1 (A3).

In a case where the hot water storage plan-creation unit 18 creates a hot water storage plan using any method of (1) and (2), the controller 19 operates the hot water supply system 1 on the basis of the hot water storage plan. Measured values measured by the sensors 5 to 8 during the operation of the hot water supply system 1, an operation mode, an operation time, and the like are stored in the storage unit 1A. These values are used for the creation and update of M0 to M2, the estimation of hot water consumption, and the like.

Next, the hot water consumption-estimation unit 12 estimates daily hot water consumption (A4).

The hot water consumption-estimation unit 12 estimates an inflow of hot water to the hot water storage tank 3 for each unit time on the basis of the inflow estimation model M0. In this case, power consumption is included in input parameters of the inflow estimation model M0, but this power consumption may be calculated with reference to the design table shown in Fig. 9 or may be calculated on the basis of the power consumption estimation model M2. Since the power consumption estimation model M2 is used, a more accurate inflow can be estimated. The hot water consumption-estimation unit 12 calculates hot water consumption for each unit time from the above-mentioned equation (1).

As described above, according to this embodiment, it is possible to set an appropriate margin of the amount of stored hot water and to create a hot water storage plan. It is possible to forecast accurate power consumption in which an environment where the hot water supply system 1 operates or individual differences are considered and which is related to the supply of hot water, and to create a hot water storage plan that optimizes this power consumption. For example, in a case where a hot water storage plan optimizing power consumption is to be created, processing for simulating power consumption required for a large number of hot water storage plans to search for an optimum hot water storage plan is often performed. Power consumption calculated in simulation is refined, so that a hot water storage plan can be selected on the basis of accurate calculation results of power consumption.

The hot water supply system 1 has been described in the above-mentioned embodiment by way of example, but the functions of the margin setting unit 14 and the power consumption correction unit 17 can be applied to a power storage system. The hot water storage tank 3 corresponds to a storage battery of the power storage system, and the water heater 2 corresponds to a generator of the power storage system. The supply of hot water to the hot water storage tank 3 corresponds to the charge of the storage battery, and the supply of hot water to the facility 4 from the hot water storage tank 3 corresponds to the discharge of power from the storage battery. In a case where a charging plan for charging the storage battery with power is to be created, the daily amount of discharge is subtracted from the daily amount of charge by a function corresponding to the margin setting unit 14 to calculate the amount R' of stored surplus power and a margin of the amount of charge, which is used to optimize the amount R' of stored surplus power, is calculated by a predetermined evaluation function. In a case where a charging plan that minimizes the amount of power used to charge the storage battery (the amount of power generated by the generator) is to be created, the calculated amount of generated power is refined during simulation by a function corresponding to the power consumption correction unit 17 and a charging plan minimizing the sum of the amount of generated power is created.

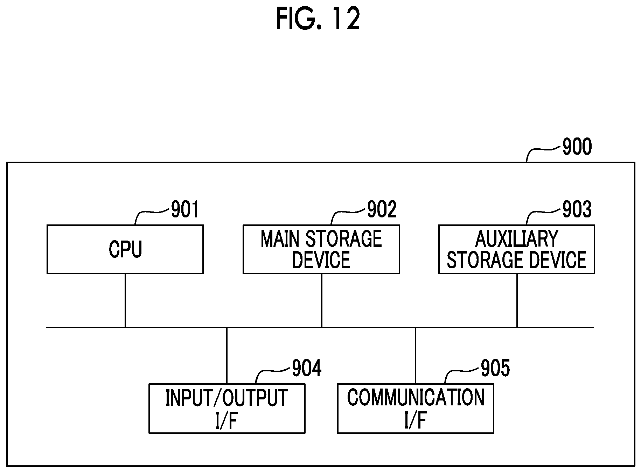

Fig. 12 is a diagram showing an example of a hardware configuration of the control system of the embodiment of the present disclosure.

A computer 900 includes a CPU 901, a main storage device 902, an auxiliary storage device 903, and an interface 904. The control system 10 described above includes the computer 900. Further, the operation of each processing unit described above is stored in the auxiliary storage device 903 in the form of a program. The CPU 901 read outs the program from the auxiliary storage device 903, loads the program on the main storage device 902, and performs the above-mentioned processing according to the program. The CPU 901 ensures a storage area in the main storage device 902 according to the program.

In at least one embodiment, the auxiliary storage device 903 is an example of a non-transitory medium. Other examples of the non-transitory medium include a magnetic disk, a magneto-optical disk, an optical disk, a semiconductor memory, and the like that are connected via the interface 904. In a case where this program is delivered to the computer 900 through a communication line, the computer 900 to which the program is delivered may load the program on the main storage device 902 and may perform the above-mentioned processing.

The process of each processing of the above-mentioned control system 10 is stored in a computer-readable recording medium in the form of a program and a computer of each device reads out and executes this program, so that the above-mentioned processing is performed. Here, the computer-readable recording medium means a magnetic disk, a magneto-optical disk, a CD-ROM, a DVD-ROM, a semiconductor memory, or the like. This computer program may be delivered to a computer via a communication line, and the computer to which the program is delivered may execute the program. The program may be to realize a part of the above-mentioned functions. The program may be a so-called difference file (difference program) that can realize the above-described functions in combination with a program already recorded in the computer system. The control system may be formed of one computer or may be formed of a plurality of computers that are connected to each other to be communicable with each other.

In addition, the components of the above-mentioned embodiment can be appropriately replaced with well-known components without departing from the scope of the present invention. The scope of the present invention is not limited to the above-mentioned embodiment, and the present invention can include various changes without departing from the scope of the present invention.

Industrial Applicability

According to the planning system, the planning method, and the program described above, it is possible to create an accurate storage plan.

Reference Signs List

| | |
|---|---|
| 1: | Hot water supply system |
| 2: | Water heater |
| 3: | Hot water storage tank |
| 4: | Facility |
| 5, 6, 7A, 7B, 8: | Sensor |
| 9A, 9B, 9C: | Pipe |
| 10: | Control system |
| 11: | Data acquisition unit |
| 12: | Hot water consumption-estimation unit |
| 13: | Hot water supply demand-forecasting unit |
| 14: | Margin setting unit |
| 15: | Power consumption forecasting unit |
| 16: | Hot water storage-simulation unit |
| 17: | Power consumption correction unit |
| 18: | Hot water storage plan-creation unit |
| 19: | Controller |
| 1A: | Storage unit |
| 900: | Computer |
| 901: | CPU |
| 902: | Main storage device |
| 903: | Auxiliary storage device |
| 904: | Interface |

**Claims**

1.   A hot water supply system (1) comprising a water heater (2), a hot water storage tank (3), a sensor, a facility (4), and a planning system (10) that creates a storage plan for a storehouse (3) storing an object to be supplied, wherein the object is hot water and the storehouse (3) is the hot water storage tank, the hot water supply system (1) comprising:

a storage plan creation unit (18) that creates the storage plan for storing an amount of stored object in which a marginal amount (S2) is added to demand based on demand forecast for the object;
an optimization unit (14) that optimizes the marginal amount, and
a controller (19) that controls an operation of the water heater (2) on the basis of the amount of stored hot water measured by the sensor and the storage plan created by the storage plan creation unit (18),
wherein the optimization unit (14) sets the marginal amount (S2) such that an evaluation value, which is based on a predetermined evaluation function with respect to an amount of remaining stored object obtained in a case where the object is supplied on the basis of the storage plan, is optimized,
wherein the storage plan creation unit (18) creates a hot water storage plan that includes a target amount of hot water stored in the hot water storage tank (3) of the hot water supply system (1) for each unit time,
wherein the optimization unit optimizes the marginal amount included in the target amount of stored hot water on the basis of the evaluation function,
wherein the optimization unit (14) sets the marginal amount such that a reward of enhanced learning obtained in a case where setting of the marginal amount is used as an action and an amount of remaining stored hot water, which is obtained in a case where the hot water supply system (1) is operated on the basis of the hot water storage plan created with the addition of the marginal amount, is used as a state is optimized.

2. The hot water supply system (1) according to claim 1, further comprising:

a simulation unit (16) that simulates an operation in which the object is stored in the storehouse (3) and the object is supplied from the storehouse (3) on the basis of the demand forecast and the storage plan; and
a function of the storage plan creation unit (18) that creates the storage plan minimizing an energy required to store the object,
wherein the simulation unit (16) simulates the operation in a predetermined unit time and calculates the energy required in the unit time for each unit time,
the optimization unit (14) calculates a ratio of a time when the energy is actually used to the unit time, and multiplies the energy for each unit time, which is calculated by the simulation unit (16), by the ratio of the time to correct the energy, and
the storage plan creation unit (18) creates the storage plan that minimizes the energy on the basis of the corrected energy.

3. The hot water supply system (1) according to claim 2,

wherein the object is hot water, and the storage plan creation unit (18) plans an amount of hot water stored in a hot water storage tank (3) of a hot water supply system (1) for each unit time,
the simulation unit (16) calculates power consumption required to boil water for each unit time, and
the optimization unit (14) multiplies the power consumption for each unit time, which is calculated by the simulation unit (16), by the ratio of the time to correct a value of the energy.

4. The hot water supply system (1) according to claim 3,
wherein the optimization unit (14)

adds an amount of hot water, which is boiled in the unit time by the hot water supply system (1), to the amount of hot water stored at a first point of time of the unit time to calculate the amount of hot water stored at an end point of time of the unit time,
calculates a ratio of a time, which passes until the amount of stored hot water reaches a target amount of hot water stored at the end point of time, to the unit time in a case where it is assumed that the amount of stored hot water is increased at a constant rate from the first point of time to the end point of time, and
uses the ratio as the ratio of the time.

5. The hot water supply system (1) according to claim 3 or 4, further comprising:

a power consumption forecasting unit (15) that forecasts power consumption required to supply hot water to the hot water storage tank (3) on the basis of a power consumption estimation model using a temperature of water to be supplied to the hot water supply system (1), an outside air temperature, and a set temperature of the hot water as explanatory variables and using power consumption required to boil the water as an objective variable,
wherein the simulation unit (16) outputs the temperature of the water, the outside air temperature, and the set temperature for each unit time to the power consumption forecasting unit (15) in the simulation,
the power consumption forecasting unit (15) forecasts the power consumption on the basis of the power consumption estimation model, and
the simulation unit (16) calculates power consumption in the unit time on the basis of the forecasted power consumption.

6. A planning method for a hot water supply system (1) comprising a water heater (2), a hot water storage tank (3), a sensor, a facility (4), and a planning system (10) that creates a storage plan for a storehouse storing an object to be supplied, wherein the object is hot water and the storehouse is the hot water storage tank (3), the planning method comprising:

a step of creating the storage plan for storing an amount of stored object in which a marginal amount (S2) is added to demand based on demand forecast for the object;

a step of optimizing the marginal amount (S2) ; and

a step of controlling an operation of the water heater (2) on the basis of the amount of stored hot water measured by the sensor and the storage plan created in the step of creating the storage plan,

wherein in the step of optimizing, the marginal amount (S2) is set such that an evaluation value, which is based on a predetermined evaluation function with respect to an amount of remaining stored object obtained in a case where the object is supplied on the basis of the storage plan, is optimized,

wherein, in the step of creating the storage plan, creating a hot water storage plan that includes a target amount of hot water stored in a hot water storage tank (3) of a hot water supply system (1) for each unit time,

wherein, in the step of optimizing, optimizing the marginal amount included in the target amount of stored hot water on the basis of the evaluation function,

wherein, in the step of optimizing, setting the marginal amount such that a reward of enhanced learning obtained in a case where setting of the marginal amount is used as an action and an amount of remaining stored hot water, which is obtained in a case where the hot water supply system (1) is operated on the basis of the hot water storage plan created with the addition of the marginal amount, is used as a state is optimized.

7. A program causing a computer to perform processing for a hot water supply system (1) comprising a water heater (2), a hot water storage tank (3), a sensor, a facility (4), and a planning system (10) that creates a storage plan for a storehouse storing an object to be supplied, wherein the object is hot water and the storehouse is the hot water storage tank (3), the processing comprising:

a step of creating the storage plan for storing an amount of stored object in which a marginal amount (S2) is added to demand based on demand forecast for the object; and

a step of optimizing the marginal amount (S2) ; and

a step of controlling an operation of the water heater (2) on the basis of the amount of stored hot water measured by the sensor and the storage plan created in the step of creating the storage plan,

wherein in the step of optimizing, the marginal amount (S2) is set such that an evaluation value, which is based on a predetermined evaluation function with respect to an amount of remaining stored object obtained in a case where the object is supplied on the basis of the storage plan, is optimized,

wherein, in the step of creating the storage plan, creating a hot water storage plan that includes a target amount of hot water stored in the hot water storage tank (3) of the hot water supply system (1) for each unit time,

wherein, in the step of optimizing, optimizing the marginal amount included in the target amount of stored hot water on the basis of the evaluation function,

wherein, in the step of optimizing, setting the marginal amount such that a reward of enhanced learning obtained in a case where setting of the marginal amount is used as an action and an amount of remaining stored hot water, which is obtained in a case where the hot water supply system (1) is operated on the basis of the hot water storage plan created with the addition of the marginal amount, is used as a state is optimized.

**Patentansprüche**

1. Warmwasserversorgungssystem (1), umfassend einen Wassererhitzer (2), einen Warmwasserspeichertank (3), einen Sensor, eine Einrichtung (4) und ein Planungssystem (10), das einen Speicherplan für ein Lager (3) erstellt, das einen zu versorgenden Gegenstand speichert, wobei der Gegenstand Warmwasser ist und das Lager (3) der Warmwasserspeichertank ist, das Warmwasserversorgungssystem (1) umfassend:

eine Speichplanerstellungseinheit (18), die den Speicherplan zum Speichern einer Menge an gespeichertem Gegenstand erstellt, bei dem eine Grenzmenge (S2) basierend auf einer Nachfrageprognose für den Gegenstand zu der Nachfrage hinzugefügt wird;

eine Optimierungseinheit (14), die die Grenzmenge optimiert, und

eine Steuerung (19), die einen Betrieb des Wassererhitzers (2) basierend auf der durch den Sensor gemessenen gespeicherten Warmwassermenge und dem durch die Speichplanerstellungseinheit (18) erstellten Speicherplan steuert,

wobei die Optimierungseinheit (14) die Grenzmenge (S2) festlegt, sodass ein Bewertungswert, der auf einer vorbestimmten Bewertungsfunktion in Bezug auf eine Menge des verbleibenden gespeicherten Gegenstands basiert, die im Fall einer Versorgung des Gegenstands basierend auf des Speicherplans erlangt wird, optimiert wird,

wobei die Speichplanerstellungseinheit (18) einen Warmwasserspeicherplan erstellt, der eine Zielmenge an gespeichertem Warmwasser beinhaltet, das in dem Warmwasserspeichertank (3) des Warmwasserversorgungssystems (1) für jede Zeiteinheit umfasst,

wobei die Optimierungseinheit die in der Zielmenge des gespeicherten Warmwassers beinhaltete Grenzmenge basierend auf der Bewertungsfunktion optimiert,

wobei die Optimierungseinheit (14) die Grenzmenge festlegt, sodass eine Belohnung von verstärktem Lernen, die in einem Fall erlangt wird, dass ein Festlegen der Grenzmenge als Aktion und eine Menge des verbleibenden gespeicherten Warmwassers, die in einem Fall erlangt wird, dass das Warmwasserversorgungssystem (1) basierend auf dem mit dem Hinzufügen der Grenzmenge erstellten Warmwasserspeicherplan betrieben wird, als Zustand verwendet wird, optimiert wird.

2.  Warmwasserversorgungssystem (1) nach Anspruch 1, ferner umfassend:

eine Simulationseinheit (16), die einen Betrieb simuliert, bei dem der Gegenstand in dem Lager (3) gespeichert und der Gegenstand (3) basierend auf der Nachfrageprognose und dem Speicherplan aus dem Lager versorgt wird; und

eine Funktion der Speichplanerstellungseinheit (18), die den Speicherplan erstellt, der eine zum Speichern des Gegenstands erforderliche Energie minimiert,

wobei die Simulationseinheit (16) den Betrieb in einer vorbestimmten Zeiteinheit simuliert und die in der Zeiteinheit für jede Zeiteinheit erforderliche Energie berechnet,

die Optimierungseinheit (14) ein Verhältnis einer Zeit, in der die Energie tatsächlich genutzt wird, zu der Zeiteinheit berechnet, und die für jede Zeiteinheit von der Simulationseinheit (16) berechnete Energie mit dem Verhältnis der Zeit multipliziert, um die Energie zu korrigieren, und

die Speichplanerstellungseinheit (18) den Speicherplan erstellt, der die Energie basierend auf der korrigierten Energie minimiert.

3.  Warmwasserversorgungssystem (1) nach Anspruch 2,

wobei der Gegenstand Warmwasser ist und die Speichplanerstellungseinheit (18) eine Menge an Warmwasser plant, die in einem Warmwasserspeichertank (3) eines Warmwasserversorgungssystems (1) für jede Zeiteinheit gespeichert wird,

die Simulationseinheit (16) den zum Erhitzen des Wassers für jede Zeiteinheit erforderlichen Stromverbrauch berechnet, und

die Optimierungseinheit (14) den für jede Zeiteinheit von der Simulationseinheit (16) berechneten Stromverbrauch mit dem Verhältnis der Zeit multipliziert, um einen Wert der Energie zu korrigieren.

4.  Warmwasserversorgungssystem (1) nach Anspruch 3,

wobei die Optimierungseinheit (14)

eine Menge an Warmwasser, die in der Zeiteinheit durch das Warmwasserversorgungssystem (1) erhitzt wird, zu der Menge an Warmwasser, die zu einem ersten Zeitpunkt der Zeiteinheit gespeichert ist, hinzufügt, um die Menge an Warmwasser zu berechnen, die zu einem Endzeitpunkt der Zeiteinheit gespeichert ist,

ein Verhältnis einer Zeit, die verstreicht, bis die Menge an gespeichertem Warmwasser eine Zielmenge an Warmwasser erreicht, die zu dem Endzeitpunkt gespeichert ist, zu der Zeiteinheit berechnet, für den Fall, dass angenommen wird, dass die Menge an gespeichertem Warmwasser von dem ersten Zeitpunkt bis zu dem Endzeitpunkt mit einer konstanten Rate erhöht wird, und

das Verhältnis als Verhältnis der Zeit verwendet.

5.  Warmwasserversorgungssystem (1) nach Anspruch 3 oder 4, ferner umfassend:

eine Stromverbrauchsprognoseeinheit (15), die einen zum Versorgen von Warmwasser in den Warmwasserspeichertank (3) erforderlichen Stromverbrauch basierend auf einem Stromverbrauchsschätzmodell unter Verwendung einer Temperatur von Wasser, das dem Warmwasserversorgungssystem (1) zugeführt werden soll, einer Außentemperatur und einer festgelegten Temperatur des Warmwassers als erklärende Variablen und unter Verwendung des zum Erhitzen des Wassers erforderlichen Stromverbrauchs als Zielvariable prognostiziert,

wobei die Simulationseinheit (16) die Temperatur des Wassers, die Außentemperatur und die festgelegte Temperatur für jede Zeiteinheit an die Stromverbrauchsprognoseeinheit (15) in der Simulation ausgibt,

die Stromverbrauchsprognoseeinheit (15) den Stromverbrauch basierend auf dem Stromverbrauchsschätzmodell prognostiziert, und

die Simulationseinheit (16) den Stromverbrauch in der Zeiteinheit basierend auf dem prognostizierten Stromverbrauch berechnet.

6. Planungsverfahren für ein Warmwasserversorgungssystem (1), umfassend einen Wassererhitzer (2), einen Warmwasserspeichertank (3), einen Sensor, eine Einrichtung (4) und ein Planungssystem (10), das einen Speicherplan für ein Lager erstellt, das einen zu versorgenden Gegenstand speichert, wobei der Gegenstand Warmwasser ist und das Lager der Warmwasserspeichertank (3) ist, das Planungsverfahren umfassend:

einen Schritt eines Erstellens des Speicherplans zum Speichern einer Menge an gespeichertem Gegenstand, bei dem eine Grenzmenge (S2) basierend auf einer Nachfrageprognose für den Gegenstand zu der Nachfrage hinzugefügt wird;

einen Schritt eines Optimierens der Grenzmenge (S2); und

einen Schritt eines Steuerns eines Betriebs des Wassererhitzers (2) basierend auf der durch den Sensor gemessenen gespeicherten Warmwassermenge und dem in dem Schritt eines Erstellens des Speicherplans erstellten Speicherplan,

wobei bei dem Schritt eines Optimierens die Grenzmenge (S2) festgelegt wird, sodass ein Bewertungswert, der auf einer vorbestimmten Bewertungsfunktion in Bezug auf eine Menge des verbleibenden gespeicherten Gegenstands basiert, die in einem Fall einer Versorgung des Gegenstands basierend auf dem Speicherplan erlangt wird, optimiert wird,

wobei bei dem Schritt eines Erstellens des Speicherplans ein Warmwasserspeicherplan erstellt wird, der eine Zielmenge an Warmwasser, das in dem Warmwasserspeichertank (3) eines Warmwasserversorgungssystems (1) gespeichert ist, für jede Zeiteinheit beinhaltet,

wobei bei dem Schritt eines Optimierens die in der Zielmenge des gespeicherten Warmwassers beinhaltete Grenzmenge basierend auf der Bewertungsfunktion optimiert wird,

wobei bei dem Schritt eines Optimierens die Grenzmenge festgelegt wird, sodass eine Belohnung eines verstärkten Lernens, die in einem Fall erlangt wird, dass die Festlegung der Grenzmenge als Aktion und eine Menge des verbleibenden gespeicherten Warmwassers, die in einem Fall erlangt wird, dass das Warmwasserversorgungssystem (1) basierend auf dem mit der Hinzufügung der Grenzmenge erstellten Warmwasserspeicherplans betrieben wird, als Zustand verwendet wird, optimiert wird.

7. Programm, das einen Computer dazu veranlasst, eine Verarbeitung für ein Warmwasserversorgungssystem (1) durchzuführen, umfassend einen Wassererhitzer (2), einen Warmwasserspeichertank (3), einen Sensor, eine Einrichtung (4) und ein Planungssystem (10), das einen Speicherplan für ein Lager erstellt, das einen zu versorgenden Gegenstand speichert, wobei der Gegenstand Warmwasser ist und das Lager der Warmwasserspeichertank (3) ist, das Verarbeiten umfassend:

einen Schritt eines Erstellens des Speicherplans zum Speichern einer Menge an gespeichertem Gegenstand, bei dem eine Grenzmenge (S2) basierend auf einer Nachfrageprognose für den Gegenstand zu der Nachfrage hinzugefügt wird; und

einen Schritt eines Optimierens der Grenzmenge (S2); und

einen Schritt eines Steuerns eines Betriebs des Wassererhitzers (2) basierend auf der durch den Sensor gemessenen gespeicherten Warmwassermenge und dem bei dem Schritt eines Erstellens des Speicherplans erstellten Speicherplan,

wobei bei dem Schritt eines Optimierens die Grenzmenge (S2) festgelegt wird, sodass ein Bewertungswert, der auf einer vorbestimmten Bewertungsfunktion in Bezug auf eine Menge des verbleibenden gespeicherten Gegenstands basiert, die in einem Fall einer Versorgung des Gegenstands basierend auf dem Speicherplans erlangt wird, optimiert wird,

wobei bei dem Schritt eines Erstellens des Speicherplans ein Warmwasserspeicherplan erstellt wird, der eine Zielmenge an Warmwasser, das in dem Warmwasserspeichertank (3) des Warmwasserversorgungssystems (1) gespeichert ist, für jede Zeiteinheit beinhaltet,

wobei bei dem Schritt eines Optimierens die in der Zielmenge des gespeicherten Warmwassers enthaltene Grenzmenge basierend auf der Bewertungsfunktion optimiert wird,

wobei bei dem Schritt eines Optimierens die Grenzmenge festgelegt wird, sodass eine Belohnung eines verstärkten Lernens, die in einem Fall erlangt wird, dass die Festlegung der Grenzmenge als Aktion und eine Menge des verbleibenden gespeicherten Warmwassers, die in einem Fall erlangt wird, dass das Warmwasserversorgungssystem (1) basierend auf dem mit der Hinzufügung der Grenzmenge erstellten Warmwasserspeicherplans betrieben wird, als Zustand verwendet wird, optimiert wird.

**Revendications**

1. Système d'alimentation en eau chaude (1) comprenant un chauffe-eau (2), un réservoir de stockage d'eau chaude (3), un capteur, une installation (4) et un système de planification (10) qui crée un plan de stockage pour un entrepôt (3) stockant un objet à fournir, l'objet étant de l'eau chaude et l'entrepôt (3) étant le réservoir de stockage d'eau chaude, le système d'alimentation en eau chaude (1) comprenant :

   une unité de création de plan de stockage (18) qui crée le plan de stockage pour stocker une quantité d'objet stocké dans laquelle une quantité marginale (S2) est ajoutée à la demande sur la base d'une prévision de la demande pour l'objet ;
   une unité d'optimisation (14) qui optimise la quantité marginale, et
   une unité de commande (19) qui commande le fonctionnement du chauffe-eau (2) sur la base de la quantité d'eau chaude stockée mesurée par le capteur et du plan de stockage créé par l'unité de création de plan de stockage (18),
   dans lequel l'unité d'optimisation (14) définit la quantité marginale (S2) de sorte qu'une valeur d'évaluation, qui est basée sur une fonction d'évaluation prédéterminée par rapport à une quantité d'objet stocké restante obtenue dans le cas où l'objet est fourni sur la base du plan de stockage, est optimisée,
   dans lequel l'unité de création de plan de stockage (18) crée un plan de stockage d'eau chaude qui comprend une quantité cible d'eau chaude stockée dans le réservoir de stockage d'eau chaude (3) du système d'alimentation en eau chaude (1) pour chaque unité de temps,
   dans lequel l'unité d'optimisation optimise la quantité marginale incluse dans la quantité cible d'eau chaude stockée sur la base de la fonction d'évaluation,
   dans lequel l'unité d'optimisation (14) définit la quantité marginale de sorte qu'une récompense d'apprentissage renforcé, obtenue dans le cas où la définition de la quantité marginale est utilisée comme action, et qu'une quantité d'eau chaude stockée restante, qui est obtenue dans le cas où le système d'alimentation en eau chaude (1) est exploité sur la base du plan de stockage d'eau chaude créé avec l'ajout de la quantité marginale, et est utilisée comme état, sont optimisées.

2. Système d'alimentation en eau chaude (1) selon la revendication 1, comprenant en outre :

   une unité de simulation (16) qui simule un fonctionnement dans lequel l'objet est stocké dans l'entrepôt (3) et l'objet est fourni à partir de l'entrepôt (3) sur la base de la prévision de la demande et du plan de stockage ; et
   une fonction de l'unité de création de plan de stockage (18) qui crée le plan de stockage minimisant une énergie requise pour stocker l'objet,
   dans lequel l'unité de simulation (16) simule le fonctionnement dans une unité de temps prédéterminée et calcule l'énergie requise dans l'unité de temps pour chaque unité de temps,
   l'unité d'optimisation (14) calcule un rapport d'un temps pendant lequel l'énergie est effectivement utilisée par rapport à l'unité de temps, et multiplie l'énergie pour chaque unité de temps, qui est calculée par l'unité de simulation (16), par le rapport du temps pour corriger l'énergie, et
   l'unité de création de plan de stockage (18) crée le plan de stockage qui minimise l'énergie sur la base de l'énergie corrigée.

3. Système d'alimentation en eau chaude (1) selon la revendication 2, dans lequel l'objet est de l'eau chaude, et l'unité de création de plan de stockage (18) planifie une quantité d'eau chaude stockée dans un réservoir de stockage d'eau chaude (3) d'un système d'alimentation en eau chaude (1) pour chaque unité de temps,

   l'unité de simulation (16) calcule la consommation électrique requise pour faire bouillir l'eau pour chaque unité de temps, et
   l'unité d'optimisation (14) multiplie la consommation électrique pour chaque unité de temps, qui est calculée par l'unité de simulation (16), par le rapport du temps pour corriger une valeur de l'énergie.

4. Système d'alimentation en eau chaude (1) selon la revendication 3, dans lequel l'unité d'optimisation (14)

   ajoute une quantité d'eau chaude, qui est bouillie dans l'unité de temps par le système d'alimentation en eau chaude (1), à la quantité d'eau chaude stockée à un premier instant de l'unité de temps pour calculer la quantité d'eau chaude stockée à un instant final de l'unité de temps,
   calcule un rapport d'un temps, qui s'écoule jusqu'à ce que la quantité d'eau chaude stockée atteigne une quantité cible d'eau chaude stockée à l'instant final, à l'unité de temps dans le cas où il est supposé que la quantité d'eau chaude stockée augmente à un taux constant du premier instant à l'instant final, et
utilise le rapport comme rapport du temps.

5. Système d'alimentation en eau chaude (1) selon la revendication 3 ou 4, comprenant en outre :

une unité de prévision de consommation électrique (15) qui prévoit la consommation électrique requise pour fournir de l'eau chaude au réservoir de stockage d'eau chaude (3) sur la base d'un modèle d'estimation de consommation électrique utilisant une température de l'eau à fournir au système d'alimentation en eau chaude (1), une température de l'air extérieur et une température de consigne de l'eau chaude comme variables explicatives et utilisant la consommation électrique requise pour faire bouillir l'eau comme variable objective, dans lequel l'unité de simulation (16) fournit en sortie la température de l'eau, la température de l'air extérieur et la température de consigne pour chaque unité de temps à l'unité de prévision de consommation électrique (15) lors de la simulation,
l'unité de prévision de consommation électrique (15) prévoit la consommation électrique sur la base du modèle d'estimation de consommation électrique, et
l'unité de simulation (16) calcule la consommation électrique dans l'unité de temps sur la base de la consommation électrique prévue.

6. Procédé de planification pour un système d'alimentation en eau chaude (1) comprenant un chauffe-eau (2), un réservoir de stockage d'eau chaude (3), un capteur, une installation (4) et un système de planification (10) qui crée un plan de stockage pour un entrepôt stockant un objet à fournir, l'objet étant de l'eau chaude et l'entrepôt étant le réservoir de stockage d'eau chaude (3), le procédé de planification comprenant :

une étape de création du plan de stockage pour stocker une quantité d'objet stocké dans laquelle une quantité marginale (S2) est ajoutée à la demande sur la base d'une prévision de la demande pour l'objet ;
une étape d'optimisation de la quantité marginale (S2) ; et
une étape de commande d'un fonctionnement du chauffe-eau (2) sur la base de la quantité d'eau chaude stockée mesurée par le capteur et du plan de stockage créé lors de l'étape de création du plan de stockage,
dans laquelle, lors de l'étape d'optimisation, la quantité marginale (S2) est définie de sorte qu'une valeur d'évaluation, qui est basée sur une fonction d'évaluation prédéterminée par rapport à une quantité d'objet stocké restante obtenue dans le cas où l'objet est fourni sur la base du plan de stockage, est optimisée,
dans laquelle, lors de l'étape de création du plan de stockage, un plan de stockage d'eau chaude est créé qui comprend une quantité cible d'eau chaude stockée dans un réservoir de stockage d'eau chaude (3) d'un système d'alimentation en eau chaude (1) pour chaque unité de temps,
dans laquelle, lors de l'étape d'optimisation, la quantité marginale incluse dans la quantité cible d'eau chaude stockée sur la base de la fonction d'évaluation est optimisée,
dans laquelle, lors de l'étape d'optimisation, la quantité marginale est définie de sorte qu'une récompense d'apprentissage renforcé obtenue dans le cas où la définition de la quantité marginale est utilisée comme action, et qu'une quantité d'eau chaude stockée restante, qui est obtenue dans le cas où le système d'alimentation en eau chaude (1) est exploité sur la base du plan de stockage d'eau chaude créé avec l'ajout de la quantité marginale, et est utilisée comme état, sont optimisées.

7. Programme amenant un ordinateur à exécuter un traitement pour un système d'alimentation en eau chaude (1) comprenant un chauffe-eau (2), un réservoir de stockage d'eau chaude (3), un capteur, une installation (4) et un système de planification (10) qui crée un plan de stockage pour un entrepôt stockant un objet à fournir, l'objet étant de l'eau chaude et l'entrepôt étant le réservoir de stockage d'eau chaude (3), le traitement comprenant :

une étape de création du plan de stockage pour stocker une quantité d'objet stocké dans laquelle une quantité marginale (S2) est ajoutée à la demande sur la base d'une prévision de la demande pour l'objet ; et
une étape d'optimisation de la quantité marginale (S2) ; et
une étape de commande d'un fonctionnement du chauffe-eau (2) sur la base de la quantité d'eau chaude stockée mesurée par le capteur et du plan de stockage créé lors de l'étape de création du plan de stockage,
dans laquelle, lors de l'étape d'optimisation, la quantité marginale (S2) est définie de sorte qu'une valeur d'évaluation, qui est basée sur une fonction d'évaluation prédéterminée par rapport à une quantité d'objet stocké restante obtenue dans le cas où l'objet est fourni sur la base du plan de stockage, est optimisée,
dans laquelle, lors de l'étape de création du plan de stockage, un plan de stockage d'eau chaude est créé qui comprend une quantité cible d'eau chaude stockée dans le réservoir de stockage d'eau chaude (3) du système d'alimentation en eau chaude (1) pour chaque unité de temps,

dans laquelle, lors de l'étape d'optimisation, la quantité marginale incluse dans la quantité cible d'eau chaude stockée sur la base de la fonction d'évaluation est optimisée,

dans laquelle, lors de l'étape d'optimisation, la quantité marginale est définie de sorte qu'une récompense d'apprentissage renforcé obtenue dans le cas où la définition de la quantité marginale est utilisée comme action, et qu'une quantité d'eau chaude stockée restante, qui est obtenue dans le cas où le système d'alimentation en eau chaude (1) est exploité sur la base du plan de stockage d'eau chaude créé avec l'ajout de la quantité marginale, et est utilisée comme état, sont optimisées.

EP 4 163 862 B1

# FIG. 1

# FIG. 2

CONTROL SYSTEM — 10

| | |
|---|---|
| DATA ACQUISITION UNIT — 11 | HOT WATER STORAGE-SIMULATION UNIT — 16 |
| HOT WATER CONSUMPTION-ESTIMATION UNIT — 12 | POWER CONSUMPTION CORRECTION UNIT — 17 |
| HOT WATER SUPPLY DEMAND-FORECASTING UNIT — 13 | HOT WATER STORAGE PLAN-CREATION UNIT — 18 |
| MARGIN SETTING UNIT — 14 | CONTROLLER — 19 |
| POWER CONSUMPTION FORECASTING UNIT — 15 | STORAGE UNIT — 1A |

# FIG. 3

EXPLANATORY VARIABLES

OBJECTIVE VARIABLE

M0

OUTSIDE AIR TEMPERATURE ⟶

POWER CONSUMPTION ⟶

WATER TEMPERATURE
THAT DOES NOT YET RISE ⟶

WATER TEMPERATURE RISE ⟶

AMOUNT OF STORED HOT WATER
THAT IS NOT YET INCREASED ⟶

OPERATION MODE ⟶

INFLOW
ESTIMATION
MODEL

⟶ INCREASE IN AMOUNT
OF STORED HOT
WATER IN CASE
WHERE OUTFLOW IS 0

# FIG. 4

EXPLANATORY VARIABLES

OBJECTIVE VARIABLE

M1

OUTSIDE AIR TEMPERATURE ⟶

DAY ⟶

WEATHER ⟶

MONTH, SEASON ⟶

TIME ZONE, TIME ⟶

DEMAND
FORECASTING
MODEL

⟶ HOT WATER
CONSUMPTION
(ESTIMATED
OUTFLOW)

## FIG. 5

DEMAND FORECAST — A1

CREATION OF HOT WATER STORAGE PLAN — A2

(1) HOT WATER STORAGE PLAN BASED ON DEMAND
· OPTIMIZATION OF MARGIN

(2) HOT WATER STORAGE PLAN BASED ON POWER CONSUMPTION
· IMPROVEMENT OF FORECAST ACCURACY
· REFINEMENT OF FORECAST

OPERATE HOT WATER SUPPLY SYSTEM — A3

DB — 1A

ESTIMATE HOT WATER CONSUMPTION — A4

EP 4 163 862 B1

## FIG. 6

## FIG. 7

# FIG. 8

| WEEK | AVERAGE AMOUNT OF STORED SURPLUS HOT WATER | REWARD |
|---|---|---|
| 1 | 36% | $\pi 1$ |
| 2 | 28% | $\pi 2$ |
| 3 | 24% | $\pi 3$ |
| 4 | . . . | . . . |
| . . . | . . . | . . . |

$$\pi 3 > \pi 2 > \pi 1$$

# FIG. 9

CASE WHERE WATER IS HEATED UP TO 65°C

| WATER SUPPLY TEMPERATURE | OUTSIDE AIR TEMPERATURE | HEATING CAPACITY | POWER CONSUMPTION | COP |
|---|---|---|---|---|
| 5°C | 25°C | XXX (kW) | XX1 (kW) | X. XX |
| | 15°C | XXX (kW) | XX2 (kW) | X. XX |
| | 5°C | XXX (kW) | XX3 (kW) | X. XX |
| | . . . | . . . | . . . | . . . |
| 17°C | 25°C | XXX (kW) | XXX (kW) | X. XX |
| | 15°C | XXX (kW) | XXX (kW) | X. XX |
| . . . | . . . | . . . | . . . | . . . |

# FIG. 10

EXPLANATORY VARIABLES

OBJECTIVE VARIABLE

OUTSIDE AIR TEMPERATURE

INCOMING WATER TEMPERATURE

BOILING TEMPERATURE

OPERATION MODE

M2

POWER
CONSUMPTION
ESTIMATION
MODEL

POWER
CONSUMPTION

# FIG. 11

AMOUNT OF STORED
HOT WATER

Soc_tmp (n+1)

TARGET AMOUNT OF
STORED HOT WATER

Z

Soc (n)

n          n1        n+1      TIME

0.6 (TIME)

Δt = 1 (TIME)

FIG. 12

**EP 4 163 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020145524 A
- US 2019219293 A1
- JP 2007139339 A